# EUROPEAN PATENT APPLICATION

(11) **EP 3 018 110 A1**
(43) Date of publication of application: **11.05.2016**
(21) Application number: 15187677.8
(22) Date of filing: 30.09.2015
(51) Int. Cl.: C04B 28/18

(54) **METHOD FOR PRODUCING HIGH-STRENGTH XONOTLITE INSULATION MATERIAL WITH LOW THERMAL CONDUCTIVITY**

(30) Priority: 04.11.2014 CN 201410611075
(71) Applicant: Wang, Minyan, Laizhou City, Shandong (CN)
(72) Inventor: Wang, Minyan, Laizhou City, Shandong (CN)
(74) Representative: Cabinet Chaillot

(57) **Abstract**

The present invention discloses a method for producing a high-strength xonotlite insulation material with a low thermal conductivity, including the following steps: (1) mixing a silicious material body and a calcium material with a Ca/Si ratio (molar ratio) of 0.6-1.2 to obtain a slurry; (2) performing a pregelatinization reaction of the slurry obtained from step (1) so as to obtain a tobermorite slurry; (3) adding a thickening and activating material into the slurry obtained from step (2); (4) compounding the slurry obtained from step (3) again with a Ca/Si ratio (molar ratio) of 0.7-1; (5) pouring the slurry obtained from step (4) into a dynamic reaction kettle to synthesize an ultra-light porous gluing body; (6) adding a fibrous body of 1%-15%, an inorganic diffusing gluing body of 1%-100%, and an appropriate amount of foam stabilizing material and foaming material into the gluing body obtained from step (5), and then stirring uniformly to form a light gluing body with an uniform structure; and (7) compression molding and drying the light gluing body obtained from step (6). The thermal insulation material produced by the present invention has the characteristics of high strength, low thermal conductivity, and uniform material.

## Description

### Field of the Invention

The present invention relates to a method for producing a high-strength xonotlite calcium silicate sheet with a low thermal conductivity, wherein the product is mainly used for thermal insulation and fire protection of external and internal walls of a building, as well as thermal insulation and energy saving of an industrial furnace.

### Background of the Invention

A traditional method for producing a xonotlite thermal insulation material is synthesizing by mixing a silicious material and a calcium material with a Ca/Si ratio (molar ratio) of 0.9-1 under a condition of a saturated steam with a temperature of 180°C-210°C and a pressure of 1.8-2.2 mpa, wherein due to effect of raw materials, temperature and pressure, it is difficult to completely obtain xonotlite crystalline and also it is more difficult to produce calcium silicate with a low thermal conductivity; Through years of production experiments, the invention has created the following technology for production, such that the xonotlite is crystallized sufficiently, and countless tiny vacuum holes are formed between xonotlite bonding interfaces to achieve the aim of minimizing the thermal conductivity, and also an inorganic gluing body and a fibrous body are added to achieve extremely high strength of the xonotlite sheet.

### Summary of the Invention

The object of the invention is providing a method for producing a high-strength xonotlite insulation material with a low thermal conductivity. The xonotlite sheet produced by adopting the present invention has a high strength, homogeneous material, and countless tiny vacuum holes and nanoscale vacuum holes, with a volumetric weight between 100 kg/m³-170 kg/m³, and a conductivity between 0.027-0.05 w/mk. By adding a reactive waterproof body before molding, a completely-waterproof and high-strength xonotlite sheet with a low thermal conductivity can be obtained. Also by permeating a waterproof body into the surface of the sheet after blank formation, a surface-waterproof and high-strength xonotlite sheet with a low thermal conductivity can be obtained.

In order to solve the aforementioned technical problem, the present invention provides a method for producing a high-strength xonotlite insulation material with a low thermal conductivity,
including the following steps:
(1) mixing a silicious material body and a calcium material with a Ca/Si ratio (molar ratio) of 0.6-1.2 to obtain a slurry;
(2) performing a pregelatinization reaction of the slurry obtained from step (1) at a temperature of 30°C-120°C for a time period of 3-120 hours, so as to obtain a sufficient amount of tobermorite slurry;
(3) adding a thickening and activating material into the slurry obtained from step (2);
(4) compounding the slurry obtained from step (3) again with a Ca/Si ratio (molar ratio) of 0.7-1, such that the slurry has a condition capable of sufficiently forming the xonotlite;
(5) pouring the slurry obtained from step (4) into a dynamic reaction kettle, and reacting the slurry under a steam with a temperature of 190°C-400°C and a pressure of 1.8 mpa-3.6 mpa for 2-10 hours to synthesize an ultra-light porous gluing body;
(6) adding a fibrous body into the gluing body obtained from step (5) with a ratio of 1%-15% (the weight ratio of the slurry to the fibrous body), and then adding an inorganic diffusing gluing body with a ratio of 1%-100% based on the weight of the slurry (the weight ratio of the slurry to the inorganic diffusing gluing body), and adding an appropriate amount of foam stabilizing material and foaming material, so as to form a light gluing body with an uniform structure; and
(7) compression molding and drying the light gluing body obtained from step (6) to obtain a xonotlite sheet having numerous vacuum holes.

A method for producing a high-strength xonotlite insulation material with a low thermal conductivity as described above includes:
(1) mixing a silicious material body and a calcium material with a Ca/Si ratio (molar ratio) of 0.6 to obtain a slurry;
(2) performing a pregelatinization reaction of the slurry obtained from step (1) at a temperature of 30°C for a time period of 3 hours, so as to obtain a tobermorite slurry;
(3) adding a thickening and activating material into the slurry obtained from step (2);
(4) compounding the slurry obtained from step (3) again with a Ca/Si ratio (molar ratio) of 0.8, such that the slurry has a condition capable of sufficiently forming the xonotlite;
(5) pouring the slurry obtained from step (4) into a dynamic reaction kettle, and reacting the slurry with a steam of 190°C under a pressure of 1.8 mpa for 2 hours to synthesize an ultra-light porous gluing body;
(6) adding a fibrous body of 1%, an inorganic diffusing gluing body of 1%, and an appropriate amount of foam stabilizing material and foaming material into the gluing body obtained from step (5) to form a light gluing body with an uniform structure;
(7) compression molding and drying the light gluing body obtained from step (6) to obtain a xonotlite sheet having numerous vacuum holes.

A method for producing a high-strength xonotlite insulation material with a low thermal conductivity as described above includes:
(1) mixing a silicious material body and a calcium material with a Ca/Si ratio (molar ratio) of 1.1 to obtain a slurry;
(2) performing a pregelatinization reaction of the slurry obtained from step (1) at a temperature of 120°C for a time period of 120 hours, so as to obtain a tobermorite slurry;
(3) adding a thickening and activating material into the slurry obtained from step (2);
(4) compounding the slurry obtained from step (3) again with a Ca/Si ratio (molar ratio) of 1.1, such that the slurry has a condition capable of sufficiently forming the xonotlite;
(5) pouring the slurry obtained from step (4) into a dynamic reaction kettle, and reacting the slurry under a steam with the temperature of 400°C and a pressure of 3.6 mpa for 8 hours to synthesize an ultra-light porous gluing body;
(6) adding a fibrous body of 15%, an inorganic diffusing gluing body of 100%, and an appropriate amount of foam stabilizing material and foaming material into the gluing body obtained from step (5) to form a light gluing body with an uniform structure; and
(7) compression molding and drying the light gluing body obtained from step (6) to obtain a xonotlite sheet having numerous vacuum holes.

A method for producing a high-strength xonotlite insulation material with a low thermal conductivity as described above includes:
(1) mixing the silicious material body and the calcium material with a Ca/Si ratio (molar ratio) of 0.9 to obtain a slurry;
(2) performing a pregelatinization reaction of the slurry obtained from step (1) at a reaction temperature of 90°C for a pre-reaction time period of 30 hours, so as to obtain a sufficient amount of tobermorite slurry;
(3) adding a thickening and activating material into the slurry obtained from step (2) to make the colloidal slurry more active and make the volume density thereof smaller and ;
(4) compounding the slurry obtained from step (3) again with a Ca/Si ratio (molar ratio) of 0.9, such that the slurry has a condition capable of sufficiently forming the xonotlite;
(5) pouring the slurry obtained from step (4) into a dynamic reaction kettle, and reacting the slurry under a steam with the temperature of 300°C and a steam pressure of 3 mpa for 4 hours to synthesize an ultra-light porous gluing body;
(6) adding a fibrous body of 8%, an inorganic diffusing gluing body of 50%, and an appropriate amount of foam stabilizing material and foaming material into the gluing body obtained from step (5) to form a light gluing body with an uniform structure; and
(7) compression molding and drying the light gluing body obtained from step (6) to obtain a xonotlite sheet having numerous vacuum holes.

A method for producing a high-strength xonotlite insulation material with a low thermal conductivity as described above includes:
adding a reactive waterproof material in step (6).

A method for producing a high-strength xonotlite insulation material with a low thermal conductivity as described above includes:
performing a surface waterproof soaking treatment on the xonotlite plate obtained from step (7).

In a method for producing a high-strength xonotlite insulation material with a low thermal conductivity as described above,
the silicious material body refers to a mixture of fine powder and nanoscale powder of high-purity SiO₂ (with a content between 98% and 99.9%) processed from a silicious material.

In a method for producing high-strength xonotlite insulation material with a low thermal conductivity as described above,
the inorganic diffusing gluing body is a mixture of inorganic glues capable of generating a cementing strength.

In a method for producing a high-strength xonotlite insulation material with a low thermal conductivity as described above,
the fibrous body is a fiber mixture capable of generating an integral strength by causing fine binding of the calcium silicate slurry.

In a method for producing a high-strength xonotlite insulation material with a low thermal conductivity as described above,
the thickening and activating material is an inorganic or organic activating material and a foaming material.

Compared with the prior art, the present invention has the following beneficial effects: The thermal insulation material produced by the present invention has a high strength, and is a homogeneous material with a combination of countless tiny vacuum holes, with a low thermal conductivity between 0.027 w/mk-0.05 w/mk, a volumetric weight between 100 kg/m³-170 kg/m³, and a heat-resistance temperature between 850°C-1050°C.

### Detailed Description of the Embodiments

The present invention is further described below in conjunction with the embodiments without any limitation.

### First Embodiment:

A method for producing a high-strength xonotlite insulation material with a low thermal conductivity includes the following steps:
1. compounding a silicious material body and a calcium material with a Ca/Si ratio (molar ratio) of 0.5 to obtain a slurry;
2. pre-reacting the slurry obtained from step 1 at a reaction temperature of 30°C for 3 hours to sufficiently form a tobermorite slurry;
3. adding a thickening and activating material into the slurry obtained from step 2 to increase the consistence and activity of the slurry;
4. compounding the slurry obtained from step 3 again with a Ca/Si ratio (molar ratio) of 0.8, to completely form the xonotlite component;
5. pouring the slurry obtained from step 4 into a high-temperature and high-pressure reaction kettle, and reacting the slurry under a steam with the temperature of 180°C and a steam pressure of 1.8 mpa for 2 hours to synthesize an ultra-light porous gluing body;
6. adding an appropriate amount of fibrous body, an inorganic diffusing gluing body, a foam stabilizing agent and a foaming agent into the gluing body obtained from step 5, and then stirring completely to form a light gluing body with a uniform structure; and
7. compression molding and drying the light gluing body obtained from step 6 to obtain a uniform xonotlite sheet having numerous vacuum holes in structure, a volume density of 100 kg/m³-170 kg/m³, and a conductivity of 0.027 w/mk-0.05 w/mk.

### Second Embodiment

A method for producing a high-strength xonotlite insulation material with a low thermal conductivity includes the following steps:
1. compounding a silicious material body and a calcium material with a Ca/Si ratio (molar ratio) of 1.1 to obtain a slurry;
2. pre-reacting the slurry obtained from step 1 at a reaction temperature of 120°C for 120 hours to sufficiently form a tobermorite slurry;
3. adding a thickening and activating material into the slurry obtained from step 2 to increase the consistence and activity of the slurry;
4. compounding the slurry obtained from step 3 again with a Ca/Si ratio (molar ratio) of 1.1, to completely form the xonotlite component;
5. pouring the slurry obtained from step 4 into a high-temperature and high-pressure reaction kettle, and reacting the slurry under a steam with the temperature of 400°C and a steam pressure of 3.6 mpa for 10 hours to synthesize an ultra-light porous gluing body;
6. adding an appropriate amount of fibrous body, an inorganic diffusing gluing body, a foam stabilizing agent and a foaming agent into the gluing body obtained from step 5, and then stirring completely to form a light gluing body with a uniform structure;
7. compression molding and drying the light gluing body obtained from step 6 to obtain a uniform xonotlite sheet having numerous vacuum holes in structure, a volume density of 170 kg/m³, and a conductivity of 0.05 w/mk.

### Third Embodiment

A method for producing a high-strength xonotlite insulation material with a low thermal conductivity includes the following steps:
1. compounding a silicious material body and a calcium material with a Ca/Si ratio (molar ratio) of 0.8 to obtain a slurry;
2. pre-reacting the slurry obtained from step 1 at a reaction temperature of 60°C for 30 hours to sufficiently form a tobermorite slurry;
3. adding a thickening and activating material into the slurry obtained from step 2 to increase the consistence and activity of the slurry;
4. compounding the slurry obtained from step 3 again with a Ca/Si ratio (molar ratio) of 0.9, to completely form the xonotlite component;
5. pouring the slurry obtained from step 4 into a high-temperature and high-pressure reaction kettle, and reacting the slurry under a steam with the temperature of 300°C and a steam pressure of 3 mpa for 4 hours to synthesize an ultra-light porous gluing body;
6. adding an appropriate amount of fibrous body, an inorganic diffusing gluing body, a foam stabilizing agent and a foaming agent into the gluing body obtained from step 5, and then stirring completely to form a light gluing body with a uniform structure; and
7. compression molding and drying the light gluing body obtained from step 6 to obtain a uniform xonotlite sheet having numerous vacuum holes in structure, a volume density of 100 kg/m³-170 kg/m³, and a conductivity of 0.027-0.05 w/mk.

In a method for producing a high-strength xonotlite insulation material with a low thermal conductivity of the present invention, a reactive waterproof material is added in step (6).

In a method for producing a high-strength xonotlite insulation material with a low thermal conductivity of the present invention, a surface waterproof soaking treatment is performed on the xonotlite sheet obtained from step (7).

In a method for producing a high-strength xonotlite insulation material with a low thermal conductivity of the present invention, the silicious material body refers to a mixture of fine powder and nanoscale powder of high-purity SiO₂ (with a content between 98% and 99.9%) processed from a silicious material.

In a method for producing a high-strength xonotlite insulation material with a low thermal conductivity of the present invention, the inorganic diffusing gluing body is a mixture of inorganic glues capable of generating a cementing strength.

In a method for producing a high-strength xonotlite insulation material with a low thermal conductivity of the present invention, the fibrous body is a fiber mixture capable of generating an integral strength by causing fine binding of the calcium silicate slurry, including the wood pulp, fiber, glass fiber, cotton fiber, carbon fiber, nylon fiber, aluminosilicate fiber and brucite fiber, and a uniform fiber combination obtained by processing some of the fibers described above according to an optimized proportion has the optimized function of strengthening.

In a method for producing a high-strength xonotlite insulation material with a low thermal conductivity of the present invention, the thickening and activating material is an inorganic or organic activating material and a foaming material.

In a method for producing a high-strength xonotlite insulation material with a low thermal conductivity of the present invention, the foam stabilizing agent and the foaming agent refer to a chemical foam stabilizing material, a chemical foaming material, a mechanical foaming material and a plant foaming material.

The index parameters of the thermal insulation material obtained by adopting the present invention are shown in the table below:

| Name | Unit | Index Value | | |
|---|---|---|---|---|
| Density | Kg/m³ | 130±10% | 150±10% | 170±10% |
| Compressive Strength | Mpa | ≥0.5 | ≥0.7 | ≥1 |
| Fracture Resistance | Mpa | ≥0.3 | ≥0.4 | ≥0.5 |
| Linear Contraction under High Temperature (1000°C, 12 h) | % | <2 | <2 | <2 |
| Thermal Conductivity (Room Temperature) | W/mk | 0.036 | 0.045 | 0.049 |
| Duration of Fire Resistance | min | 180 | 180 | 180 |
| Hydrophobic Ratio | % | 98 | 98 | 98 |
| Moisture Content | % | ≤6 | ≤6 | ≤6 |

The calcium silicate produced by using a traditional process has the conductivity of 0.058 w/mk, such that by comparison of the above data, the present invention is most advanced, because low thermal conductivity will be indicative of a very good inorganic energy-saving material.

The present invention is particularly characterized in that:
1. an overheat steam with a temperature of 180°C-400°C and a pressure of 1.8 mpa-3.6 mpa is used for dynamic synthesis;
2. a silicious material body is used to make the silicious material be compounded with a grain size from microscale to nanoscale, and also a high-purity SiO₂ combination is adopted;
3. a pregelatinization reaction technique is used to produce tobermorite, such that the strength of the sheet is enhanced after synthesis under a high temperature and a high pressure;
4. materials used for thickening and activating the silicious material and the calcium material are adopted to decrease the volume density;
5. a fiber combination is used;
6. an inorganic gluing body is used;
7. a technique for foam stabilizing and foaming of the calcium silicate slurry is adopted, such that a combination of countless tiny vacuum holes are formed in the molded calcium silicate sheet; and
8. a reactive waterproof agent is added before forming a blank, such that a completely-waterproof high-strength xonotlite sheet with a low thermal conductivity is obtained. After blank formation, a reactive waterproof agent permeates the surface of the sheet to obtain a surface-waterproof xonotlite sheet.

The high-strength xonotlite sheet with a low thermal conductivity produced in the present invention is used for thermal insulation of external and internal walls of a building, and is also applied for thermal insulation of a industrial furnace.

Only preferred embodiments of the present invention are described above. However, it should be noted that for those of ordinary skill in the art, some modifications can be without departing from the technical principle of the present invention, and these improvements and modifications should also fall within the protection scope of the present invention.

## Claims

1. A method for producing a high-strength xonotlite insulation material with a low thermal conductivity,
comprising the following steps:
(1) mixing a silicious material body and a calcium material with a Ca/Si ratio (molar ratio) of 0.6-1.2 to obtain a slurry;
(2) performing a pregelatinization reaction of the slurry obtained from step (1) at a temperature of 30°C-120°C for a time period of 3-120 hours, so as to obtain a tobermorite slurry;
(3) adding a thickening and activating material into the slurry obtained from step (2) to decrease the volume density of the slurry and make the slurry more active;
(4) compounding the slurry obtained from step (3) again with a Ca/Si ratio (molar ratio) of 0.7-1, such that the slurry has a condition capable of sufficiently forming the xonotlite;
(5) pouring the slurry obtained from step (4) into a dynamic reaction kettle, and reacting the slurry under a steam with a temperature of 190°C-400°C and a pressure of 1.8 mpa-3.6 mpa for 2-10 hours to synthesize an ultra-light porous gluing body;
(6) adding a fibrous body into the gluing body obtained from step (5) with a ratio of 1%-15% (the weight ratio of the slurry to the fibrous body), and then adding an inorganic diffusing gluing body with a ratio of 1%-100% based on the weight of the slurry, and adding an appropriate amount of foam stabilizing material and foaming material, so as to form a light gluing body with an uniform structure; and
(7) compression molding and drying the light gluing body obtained from step (6) to obtain a xonotlite sheet having numerous vacuum holes.

2. The method for producing a high-strength xonotlite insulation material with a low thermal conductivity of claim 1, **characterized by**:
(1) mixing a silicious material body and a calcium material with a Ca/Si ratio (molar ratio) of 0.6 to obtain a slurry;
(2) performing a pregelatinization reaction of the slurry obtained from step (1) at a temperature of 30°C for a time period of 3 hours, so as to obtain a tobermorite slurry;
(3) adding a thickening and activating material into the slurry obtained from step (2);
(4) compounding the slurry obtained from step (3) again with a Ca/Si ratio (molar ratio) of 0.8, such that the slurry has a condition capable of sufficiently forming the xonotlite;
(5) pouring the slurry obtained from step (4) into a dynamic reaction kettle, and reacting the slurry under a steam with a temperature of 190°C and a pressure of 1.8 mpa for 2 hours to synthesize an ultra-light porous gluing body;
(6) adding a fibrous body of 1%, an inorganic diffusing gluing body of 1%, and an appropriate amount of foam stabilizing material and foaming material into the slurry obtained from step (5) to form a light gluing body with an uniform structure; and
(7) compression molding and drying the light gluing body obtained from step (6) to obtain a xonotlite sheet having numerous vacuum holes.

3. The method for producing a high-strength xonotlite insulation material with a low thermal conductivity of claim 1, **characterized by**:
(1) mixing a silicious material body and a calcium material with a Ca/Si ratio (molar ratio) of 1.1 to obtain a slurry;
(2) performing a pregelatinization reaction of the slurry obtained from step (1) at a temperature of 120°C for a time period of 120 hours, so as to obtain a tobermorite slurry;
(3) adding a thickening and activating material into the slurry obtained from step (2);
(4) compounding the slurry obtained from step (3) again with a Ca/Si ratio (molar ratio) of 1.1, such that the slurry has a condition capable of sufficiently forming the xonotlite;
(5) pouring the slurry obtained from step (4) into a dynamic reaction kettle, and reacting the slurry under a steam with a temperature of 400°C and a pressure of 3.6 mpa for 8 hours to synthesize an ultra-light porous gluing body;
(6) adding a fibrous body of 15%, an inorganic diffusing gluing body of 100%, and an appropriate amount of foam stabilizing material and foaming material into the slurry obtained from step (5) to form a light gluing body with an uniform structure; and
(7) compression molding and drying the light gluing body obtained from step (6) to obtain a xonotlite sheet having numerous vacuum holes.

4. The method for producing a high-strength xonotlite insulation material with a low thermal conductivity of claim 1, **characterized by** comprising the following steps:
(1) mixing the silicious material body and the calcium material with a Ca/Si ratio (molar ratio) of 0.9 to obtain a slurry;
(2) performing a pregelatinization reaction of the slurry obtained from step (1) at a reaction temperature of 90°C for a pre-reaction time period of 50 hours, so as to obtain a sufficient amount of tobermorite slurry;
(3) adding a thickening and activating material into the slurry obtained from step (2) to make the colloidal slurry more active and make the volume density thereof smaller;
(4) compounding the slurry obtained from step (3) again with a Ca/Si ratio (molar ratio) of 0.9, such that the slurry has a condition capable of sufficiently forming the xonotlite;
(5) pouring the slurry obtained from step (4) into a dynamic reaction kettle, and reacting the slurry under a steam with a temperature of 300°C and a steam pressure of 3 mpa for 4 hours to synthesize an ultra-light porous gluing body;
(6) adding a fibrous body of 8%, an inorganic diffusing gluing body of 50%, and an appropriate amount of foam stabilizing material and foaming material into the slurry obtained from step (5) to form a light gluing body with an uniform structure; and
(7) compression molding and drying the light gluing body obtained from step (6) to obtain a xonotlite sheet having numerous vacuum holes.

5. The method for producing a high-strength xonotlite insulation material with a low thermal conductivity of any of claims 1-4, **characterized by**:
adding a reactive waterproof material in step (6).

6. The method for producing a high-strength xonotlite insulation material with a low thermal conductivity of claim 5, **characterized by**:
performing a surface waterproof soaking treatment on the xonotlite sheet obtained from step (7).

7. The method for producing a high-strength xonotlite insulation material with a low thermal conductivity of claim 6, **characterized in that**:
the silicious material body refers to a mixture of fine powder and nanoscale powder of high-purity SiO₂ (with a content between 98% and 99.9%) processed from a silicious material.

8. The method for producing a high-strength xonotlite insulation material with a low thermal conductivity of claim 6, **characterized in that**:
the inorganic diffusing gluing body is a mixture of inorganic glues capable of generating a cementing strength.

9. The method for producing a high-strength xonotlite insulation material with a low thermal conductivity of claim 6, **characterized in that**:
the fibrous body is a fiber mixture capable of generating an integral strength by causing fine binding of the calcium silicate slurry.

10. The method for producing a high-strength xonotlite insulation material with a low thermal conductivity of claim 6, **characterized in that**:
the thickening and activating material is an inorganic or organic activating material and a foaming material.
